# EUROPÄISCHE PATENTSCHRIFT

(11) **EP 0 621 835 B1**
(45) Veröffentlichungstag und Bekanntmachung des Hinweises auf die Patenterteilung: **07.02.1996**
(21) Anmeldenummer: 92924713.8
(22) Anmeldetag: 11.12.1992
(51) Int. Cl.: B60T 8/40, F04B 53/10

(54) **PUMPE MIT EINEM DRUCKVENTIL**
PUMP WITH PRESSURE VALVE
POMPE AVEC UNE SOUPAPE DE REFOULEMENT

(30) Priorität: 24.01.1992 DE 4201826
(43) Veröffentlichungstag der Anmeldung: 02.11.1994
(73) Patentinhaber: ITT Automotive Europe GmbH, D-60488 Frankfurt am Main (DE)
(72) Erfinder: VOLZ, Peter, D-6100 Darmstadt (DE); OBERSTEINER, Georg, D-6240 Königstein (DE); OTTO, Albrecht, D-6450 Hanau 6 (DE)
(86) Internationale Anmeldenummer: EP9202864
(87) Internationale Veröffentlichungsnummer: WO9314960

(56) Entgegenhaltungen:
- EP-A- 0 387 506
- EP-A- 0 408 177
- WO-A-90/11212
- DE-A- 3 808 901
- GB-A- 2 126 297
- US-A- 3 896 845

## Beschreibung

Die Erfindung bezieht sich auf eine Pumpe mit einem Druckventil mit den Merkmalen des Oberbegriffs des Anspruchs 1.

Eine derartige Pumpe ist aus der DE-OS 39 12 935 bekannt. Die dort beschriebene Pumpe ist zum Einsatz in einer blockiergeschützten hydraulischen Bremsanlage vorgesehen. Um die Geräuschemission der Pumpe während des Betriebs zu minimieren, wird in der Offenlegungsschrift vorgeschlagen, dem Druckventil eine Dämpfungskammer, ein Rückschlagventil und eine Drossel nachzuschalten.

Druckventil und Rückschlagventil sind in einem Ventilträger ausgebildet, der in das Gehäuse der Pumpe eingesetzt werden kann. Ein Haltetopf wird in das Gehäuse eingeschraubt und hält den Ventilträger. Zwischen einer Stirnseite des Ventilträgers und dem Boden des Topfes ist eine Dehnungskammer ausgebildet, die von einem hartelastischen Gummielement begrenzt wird. Dieses Element hat die Aufgabe, Druckspitzen im Druckmedium am Ausgang der Pumpe aufzunehmen, die im angeschlossenen Bremssystem Geräusche verursachen würden.

Es besteht die Aufgabe die Geräuschentwicklung noch weiter zu reduzieren.

Aus der DE-OS 28 51 134 ist eine blockiergeschützte hydraulische Bremsanlage bekannt, bei der am Ausgang der Pumpe ein nur wenig vorgespannter Speicher vorgesehen ist. Wird die Pumpe während einer Blockierschutzregelung in Betrieb gesetzt, so fördert sie zunächst eine bestimmte Druckmittelmenge in diesen Speicher. Da die Bremsleitung, hervorgerufen durch den unter einer Pedalkraft stehenden Hauptzylinder, unter einem hohen Druck steht, kann das in den Speicher eingebrachte Druckmittel während einer Bremsung nicht zurück in die Bremsleitung fließen. Dies hat den Vorteil, daß die Dichtmanschetten der Hauptzylinderkolben nicht beschädigt werden können. Das in den Speicher eingebrachte Druckmittel gelangt erst dann wieder in den Bremskreis, wenn der Fahrer die Bremsung beendet und die Fußkraft, die auf das Pedal wirkt, zurücknimmt.

Eine weitere Aufgabe der Erfindung besteht daher darin, einen derartigen Speicher in das Pumpengehäuse zu integrieren.

Aus der WO-A-9011212 ist bereits eine blockiergeschützte hydraulische Bremsanlage hervorgegangen, die zwecks Reduzierung der Druckpulsation und zur Verringerung der Schallemission im Bereich der Pumpendruckleitung ein Rückschlagventil aufweist, das zur Pumpe hin sperrt und zwischen einer Dämpfungseinrichtung und dem Hauptzylinder angeordnet ist. Die Dämpfungseinrichtung ist als Dämpfungskammer mit einem darin beweglich angeordneten, federbelasteten Kolben versehen, so daß Druckpulsationen hoher Intensität durch die Volumenerweiterung in der Dämpfungseinrichtung geglättet werden.

Eine Abstimmung der Dämpfungseinrichtung und des Rückschlagventils auf die erforderliche Druck- und Volumenaufnahme während der Bremsschlupfregelung, um den Hauptzylinder von der Druckmittelförderung zu entkoppeln, ist nicht vorgesehen, so daß die Rückförderung von Druckmittel in den Hauptzylinder nicht ausgeschlossen ist, was die Verwendung von hochdruckbeständigen Zentralventilen im Hauptzylinder erfordert. Ferner baut die vorgeschlagene Bremsanlage insbesondere im Hinblick auf die Anordnung der Dämpfungseinrichtung am Pumpengehäuse zu aufwendig, da kein Lösungsweg vorgeschlagen ist, der ein zweckmäßige Integration des axial beweglich verschiebbaren Dämpferkolbens in einer Kammer zuläßt.

Daher ist es die Aufgabe der Erfindung, die vorgenannten Nachteile zu beseitigen, um eine besonders kompakt bauende Pumpenanordnung zu schaffen, die über eine Dämpfungseinrichtung verfügt und die während der Bremsschlupfregelung die Druckbeaufschlagung des Hauptzylinders aus Richtung der Pumpe verhindert.

Diese Aufgabe wird erfindungsgmäß durch die den Patentanspruch 1 kennzeichnenden Merkmale gelöst, wonach senkrecht zur Pumpkolbenachse im Pumpengehäuse gestufte Sackbohrungen vorgesehen sind, die mit dem Pumpenraum in Verbindung stehen, wobei die Sackbohrungen zwei jeweils von einem topfförmigen Verschlußteil gehaltene Trägerkörper aufnehmen und wobei am Trägerkörper ein axial bewegbarer Kolben anlegbar ist, der in koaxialer Anordnung zum Trägerkörper und unter Wirkung einer nur leicht vorgespannten Feder während einer Bremsschlupfregelung an einem rückwärtigen Anschlag des Haltekörpers anliegt, bis der stromabwärts am Rückschlagventil und im Trägerkörper anstehende Druck unterhalb dem Ventilöffnungsdruck des stromabwärts öffnenden Rückschlagventils sinkt, wonach sich der Übergangsspeicher in Richtung des Hauptbremszylinders entladen kann.

Weitere vorteilhafte Ausgestaltungen, die in den Unteransprüchen beschrieben sind, beziehen sich auf das Rückschlagventil, einen Filter, der Ausgestaltung eines weiten Ringraumes, um den Ausgang der Pumpe besser an das Bremsleitungssystem anschließen zu können, sowie auch eine Einschraubblende, die es ermöglicht, das Pumpenaggregat an das jeweilige Fahrzeugbremssystem anzupassen.

In einer weiteren Ausgestaltung wird im Ventilträger ein Schaltventil integriert, das eine Bypass-Leitung zu einer Drossel in der Bremsleitung sperrt, sobald die Pumpe fördert. Die Drossel bewirkt eine Druckabsenkung, so daß der Differenzdruck am Einlaßventil verringert wird. Auch diese Maßnahme bewirkt eine Geräuschreduzierung.

Die Beschreibung der Erfindung erfolgt anhand von 5 Figuren.
- Figur 1: hydraulischer Schaltplan einer blockiergeschützten Bremsanlage,
- Figur 2: Pumpengehäuse mit einer Druckventilpatrone und einem integrierten Speicher,
- Figur 3: erste Variation der Figur 2
- Figur 4: zweite Variation der Figur 2
- Figur 5: weitere Variation der Figur 2 mit einem zusätzlichen Schaltventil
Zunächst sei auf Figur 1 Bezug genommen.

Die Bremsanlage besteht aus einem Hauptbremszylinder 1, an dem eine Radbremse 2 über eine Bremsleitung 3 angeschlossen ist. In die Bremsleitung 3 eingefügt ist ein Einlaßventil 4, das in seiner Grundstellung die Bremsleitung offen hält und in seiner Schaltstellung die Bremsleitung sperrt. Parallel zum Einlaßventil ist ein Rückschlagventil 5 geschaltet, das zum Hauptzylinder hin öffnet. Das Rückschlagventil ermöglicht eine sofortige Druckabsenkung in den Radbremsen, wenn die Betätigungskraft auf den Hauptbremszylinder gesenkt wird.

Die Radbremse 2 steht über eine weitere Leitung, der Rücklaufleitung 6, mit dem Hauptbremszylinder in Verbindung. In die Leitung eingefügt ist eine Pumpe 8 mit einem Saugventil 9 und einem Druckventil 10. Zwischen der Radbremse 2 und der Pumpe 8 ist ein Auslaßventil 7 eingefügt, das in seiner Grundstellung die Rücklaufleitung 6 sperrt und in seiner Schaltstellung die Rücklaufleitung 6 freigibt. An der Saugseite der Pumpe, also zwischen dem Saugventil 9 und dem Auslaßventil 7, schließt ein Niederdruckspeicher (im folgenden Rücklaufspeicher 11 genannt) an. Er hat die Aufgabe, Druckmittel, das nicht unmittelbar von der Pumpe weitergefördert wird, kurzzeitig aufzunehmen.

Der Hauptbremszylinder weist einen Kolben 12 auf, der mit einem (symbolisch dargestellten) Pedal verbunden ist. An dem Kolben 12 ist eine Manschette 13 befestigt, die in der gezeigten Grundstellung des Kolbens unmittelbar vor einer Auslaßbohrung 14 liegt, die mit einem (nicht dargestellten) Reservoir verbunden ist. In der Grundstellung des Kolbens 12 besteht daher eine Verbindung zwischen dem Reservoir und dem Bremskreis. Wird der Kolben 12 unter Wirkung der Pedalkraft (gemäß der Darstellung nach links) verschoben, so überfährt die Manschette 13 die Auslaßbohrung 14, so daß der Bremskreis vom Reservoir getrennt ist und im Bremskreis ein Druck aufgebaut werden kann. Der Weg zwischen der Grundposition des Kolbens 12 und der Position, in der die Manschette die Auslaßbohrung 14 vollständig überfahren hat, wird mit s bezeichnet.

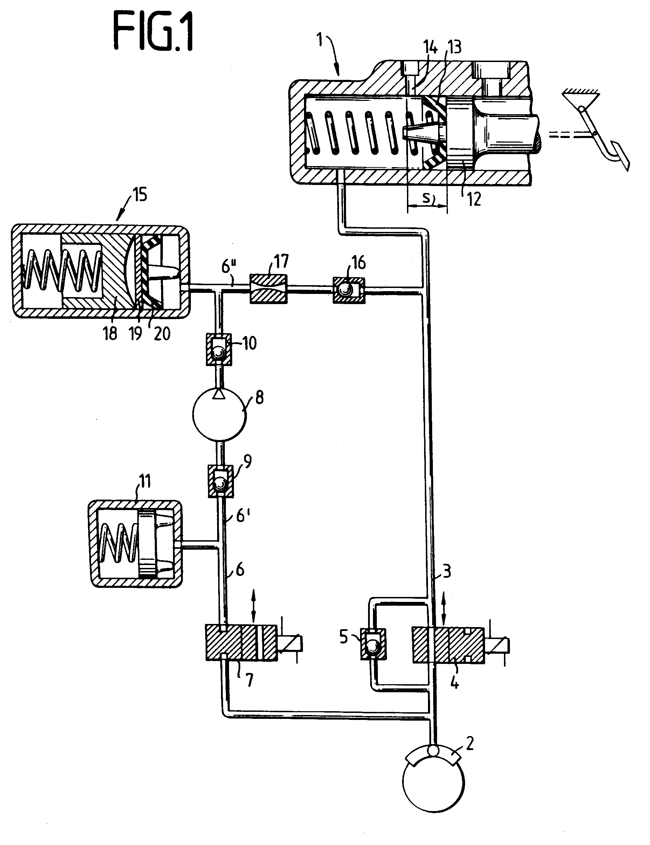

Die bisher beschriebene Bremsanlage wird nun mit einem weiteren Niederdruckspeicher (im folgenden Übergangspeicher 15 genannt) versehen. Dieser schließt gemäß der Figur 1 an den Druckbereich 6'' (zwischen Pumpe und Hauptbremszylinder) der Rücklaufleitung 6 an. Er besteht aus einem Kolben 18 mit einer Manschette 20, der den Speicherraum gegenüber der Atmosphäre trennt. Die Manschette 20 ist an einer Blattfeder 19 abgestützt. Die Blattfeder 19 kann sich in eine Wölbung am Boden des Kolbens einlegen. Mit dieser Maßnahme sollen Geräuschemissionen unterbunden werden. Der Kolben 18 steht unter der Wirkung einer nur leicht vorgespannten Feder. Im Druckbereich 6'' der Rücklaufleitung 6 befindet sich im Bereich zwischen dem Übergangspeicher 15 und der Einmündung der Rücklaufleitung 6 in die Bremsleitung 3 eine Drossel 17 und ein Rückschlagventil 16. Die beiden Elemente sind hintereinander geschaltet. Das Rückschlagventil 16 verhindert, daß bei einer Bremsung, die nicht geregelt ist, Druckmittel in den Übergangspeicher 15 gelangt.

Die Bremsanlage arbeitet nach dem folgenden Schema.

Durch Betätigung des Pedals kann ein Druck in der Radbremse 2 aufgebaut werden. Sensoren überwachen das Drehverhalten des Rades, so daß eine Blockiergefahr ermittelt werden kann. Tritt diese auf, so schaltet die Anlage in den ABS-Modus. Während des ABS-Modus läuft die Pumpe. Zum Senken des Drucks in der Radbremse, wird nun das Einlaßventil 4 geschlossen und das Auslaßventil 7 geöffnet. Dadurch gelangt Druckmittel aus der Radbremse in den Rücklaufspeicher 11 und wird von dort mittels der Pumpe zunächst in den Übergangspeicher 15 gefördert. Solange der Speicher 15 noch nicht vollständig gefüllt ist, herrscht vor dem Rückschlagventil 16 nur ein kleiner Druck, da die Feder des Übergangspeichers 15 nur eine leichte Vorspannung aufweist. Sobald der Übergangspeicher 15 vollständig gefüllt ist, legt sich der Kolben 18 an einen rückwärtigen Anschlag an, so daß nun der Druck vor dem Rückschlagventil 16 ansteigen kann. Sobald der Druck des Hauptzylinders erreicht ist, strömt Druckmittel über das Rückschlagventil 16 zum Hauptbremszylinder. Der Speicher 15 kann dabei nicht entleert werden, da dies zur Folge hätte, daß der Druck vor dem Rückschlagventil 16 sinken würde und damit nicht in der Lage wäre das Rückschlagventil 16 gegen den Hauptzylinderdruck zu öffnen. Solange also eine Regelung abläuft und ein Druck im Hauptbremszylinder ansteht, bleibt der Übergangspeicher 15 gefüllt. Erst wenn das Pedal freigegeben wird und der Druck im Hauptbremszylinder sinkt, ist die Feder des Übergangspeichers 15 in der Lage den Kolben 18 zu verschieben und das Druckmittel im Übergangspeicher 15 in den Hauptbremszylinder 1 zu verbringen. Dabei überfährt die Manschette die Auslaßbohrung 14 drucklos, so daß keine Beschädigung auftreten kann.

In den folgenden Figuren wird eine Ausgestaltung der Pumpe 8 mit Druckventil 10, Drossel 17, Rückschlagventil 16 und Speicher 15 dargestellt.

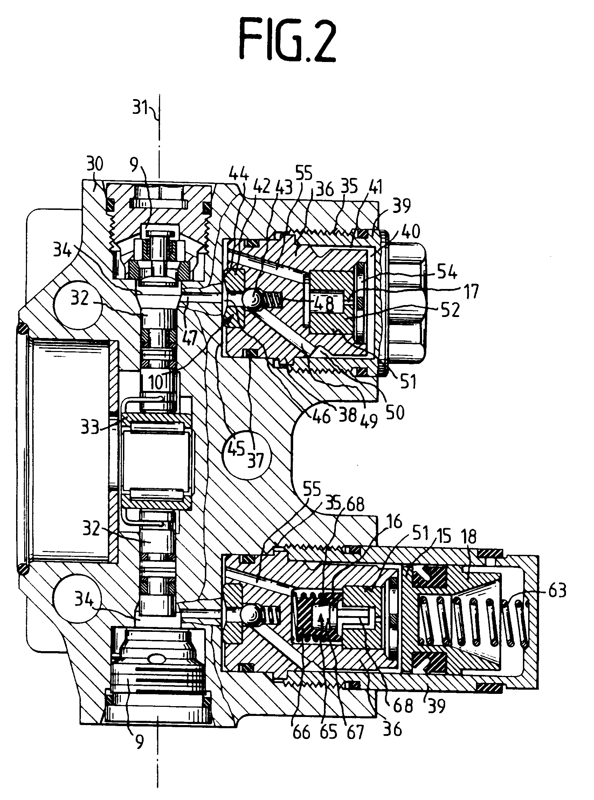

Dazu zeigt die Figur 2 einen Schnitt durch ein Pumpengehäuse 30. In einer Achse 31 des Gehäuses 30 sind Pumpenkolben 32, die über einen Exzenter 33 angetrieben werden, angeordnet. Die Pumpe ist zweikreisig und versorgt mit jeweils einem Kreis einen Bremskreis.

Die Kolben 32 begrenzen die Pumpenräume 34, die jeweils über ein Saugventil 9 an die Rücklaufleitung 6 (siehe Figur 1) anschließen. Die Saugventile 9 sind auf der Achse 31 des Gehäuses 30 angeordnet. Senkrecht zur Achse 31 sind im Gehäuse 30 zwei gestufte Sackbohrungen 35 vorgesehen. Jede Sackbohrung korrespondiert mit einem Pumpenraum 34.

Jede Sackbohrung 35 nimmt einen zylinderförmigen Ventilträger 36 auf. Dieser wird von einem topfförmigen Verschlußteil 39 gehalten.

Gemäß dem oberen Teil der Figur 2 beherbergt der Ventilträger 36 das Druckventil 10 und eine Drossel 17. Gemäß dem unteren Teil ist zusätzlich der Speicher 15 und das Rückschlagventil 16 integriert.

Diese Darstellungsform wurde der Einfachheit halber gewählt, grundsätzlich können auch beide Kreise mit der einen oder anderen Ausführungsform versehen werden.

Beide Arten sind weitgehend identisch aufgebaut, so daß im folgenden nur auf das obere Teilbild Bezug genommen wird. Ergänzende Änderungen werden im unteren Teil der Figur 2 beschrieben.

Die gestufte Sackbohrung 35 weist in ihrem Bereich größeren Durchmessers, der sich nach außen hin öffnet, ein Innengewinde auf. In dem unteren Teil der Sackbohrung, der im Gehäuseinneren liegt, ist der zylinderfömrige Ventilträger 36 dichtend eingesteckt. Dazu weist der Ventilträger 36 an seinem unteren Ende eine Dichtung 37 auf.

Das untere Ende weist etwa ein Drittel der Gesamtlänge des Ventilträgers 36 auf. An dem Bereich des Ventilträgers 36, der in den unteren Teil der Sackbohrung 35 eingesteckt ist, schließt sich eine umlaufende Kante 38 an. Diese Kante wirkt mit dem topfförmigen Verschlußteil 39 zusammen.

Das Verschlußteil 39 besteht aus einer Hülse und einem Boden. Die Hülse trägt ein Außengewinde und ist in das Innengewinde der Sackbohrung 35 eingeschraubt. Der Rand der Hülse stützt sich an der Kante 38 ab und fixiert damit den Ventilträger 36 im Gehäuse. Der obere Teil des Ventilträgers 36, der sich in etwa über 2/3 der Gesamtlänge des Ventilträgers erstreckt, befindet sich innerhalb des Verschlußteils 39. Zwischen der Stirnseite des Ventilträgers 36 und dem Boden des Verschlußteils 39 ist eine Kammer 40 ausgebildet.

Der obere Teil des Ventilträgers hat eine Zylinderform, wobei der Zylinder einen Durchmesser aufweist, der etwas kleiner ist als der Innendurchmesser der Hülse des Verschlußteils 39. Dadurch entsteht ein Ringspalt 41 zwischen der Zylinderwand des Ventilträgers und der Innenwandung der Hülse.

Das Druckventil ist nun im unteren Teil des Ventilträgers 36 angeordnet und zwar in der Achse des Ventilträgers. In die Stirnseite des Ventilträgers ist ein ringförmiges Einsatzstück 42 angesetzt, das den Ventilsitz trägt und mit einem Ventilkörper 43 zusammenwirkt.

An seiner Außenseite trägt das Einsatzstück 42 eine umlaufende Kante 44, die an den Boden der Sackbohrung 35 aufgesetzt ist. Auf diese Weise wird ein zentraler Einlaßraum 46 gebildet und ein Ringraum 45. Der Einlaßraum 46 steht über einen Gehäusekanal 47 mit dem Pumpenraum 34 in Verbindung. Auf der anderen Seite des Einsatzstücks 42 befindet sich der Auslaßraum 48, in dem auch die Ventilkugel 43 angeordnet ist. Der Auslaßraum 48 steht über einen schräg zur Achse des Ventilträgers 36 verlaufenden Kanal 49 mit der Kammer 40 in Verbindung.

Zwischen der umlaufenden Kante 38 und dem zylinderförmigen Bereich des Ventilträgers im oberen Teil verläuft eine Ringnut 50. In diese mündet der Kanal 49 ein. Druckmittel, das über das Druckventil 10 einströmt, gelangt somit zunächst in die Auslaßkammer 48 und von dort über den Kanal 49 in die Ringnut 50. Von der Ringnut 50 fließt es weiter über den Ringspalt 41 in die Kammer 40.

Der Ventilträger 36 weist weiterhin eine Sackbohrung 51 auf, die sich zur Kammer 40 hin öffnet. In die Sackbohrung 51 ist ein Träger 52 eingesteckt, der über eine zentral angeordnete Blende 17 verfügt. Die Blende 17 liegt zwischen der Kammer 40 und dem Raum, der vom Träger 52 in der Sackbohrung 51 abgetrennt wird.

Zwischen der Blende 17 und dem Raum 40 ist ein flaches Filterteil 54 angeordnet.

Der Raum, der in der Sackbohrung 51 begrenzt wird, steht über einen Kanal 55 mit dem schon beschriebenen Ringraum 45 in Verbindung. Dieser wiederum steht über einen nicht dargestellten Gehäusekanal mit der Bremsleitung 3 in Verbindung.

Die Verbindung der Pumpe 8 zum Bremskreis ist somit hergestellt.

Im unteren Teil der Figur 2 ist der Ventilträger 36 erweitert um einen Speicher 15. Die Veränderungen sind geringfügig.

Die Hülse des Verschlußteils 39 ist dazu verlängert, so daß die Kammer 40 erweitert wird. Dieser nimmt nun einen Kolben 18 auf, der von einer schwachen Feder 63 in Richtung auf den Ventilträger 36 gedrückt wird. Gelangt Druckmittel in die Kammer 40, so wird der Kolben 18 in Richtung auf den Boden des Topfes 39 verschoben, so daß die Kammer 40 erweitert wird und Druckmittel aufnimmt. Der Raum hinter dem Kolben 18 steht über eine Bohrung im Verschlußteil 39 mit der Atmosphäre in Verbindung. Über die Bohrung ist ein Verschlußring gelegt.

Das Rückschlagventil 16 ist wie folgt angeordnet.

Die Sackbohrung 51 im Ventilträger 36 ist verlängert, so daß der Raum, der von dem Träger 52 in der Sackbohrung begrenzt ist, vergrößert ist. Dieser Raum nimmt nun ein Ventilkörper 65 auf. Der Ventilkörper 65 besteht aus einem elastischen Material, das als Hut 66 ausgebildet ist und über einen Kopf 67 gestülpt ist. Eine Kante 68 am Kopf 67 hält den Hut fest.

Die Kante des Huts 66 ragt über den Kopf 67 hinaus und dient als Dichtlippe, die an den Träger 52 anlegbar ist und auf diese Weise die Verbindung sperrt.

Der Kopf 67 ist mit einem Stift 68 verbunden, der in eine Bohrung im Träger 52 eingesteckt ist und auf diese Weise den Ventilkörper 65 führt.

Wird im Kanal 55 von der Bremsleitung 3 her ein Druck aufgebaut, so schließt das Ventil 16, so daß kein Druckmittel in den Speicher 18 gelangt.

Andererseits kann Druckmittel, sobald der Speicher gefüllt ist, von der Kammer 40 über das Rückschlagventil 16 in die Bremsleitung 3 fließen.

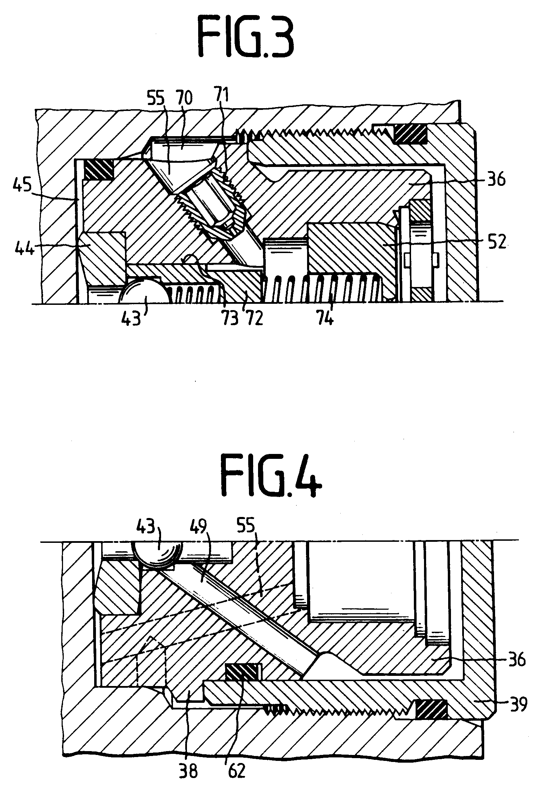

In der Figur 3 ist eine erste Änderung des Ventilträgers 36 gezeigt. Der Kanal 55 mündet nun nicht mehr in den Ringraum 45 sondern in einen Ringraum 70 am Übergang von der kleineren zur größeren Stufe der Sackbohrung. Der Kanal im Pumpengehäuse 30 muß entsprechend verlegt werden.

Diese Anordnung hat den Vorteil, daß die Kante 44 nicht absolut dicht sein muß.

In den Kanal 55 kann nun ein Blendeneinsatzstück 71 eingeschraubt werden. Der Blendenquerschnitt kann dem jeweiligen Bremssystem angepaßt werden.

Eine weitere Änderung besteht darin, die Ventilkugel 43 nicht unmittelbar am Ventilträger 36 abzustützen, sondern an einem Gleitkörper 72, der in einer Bohrung 73 im Ventilträger 36 gleitet und über eine Feder 74 am Träger 52 abgestützt ist.

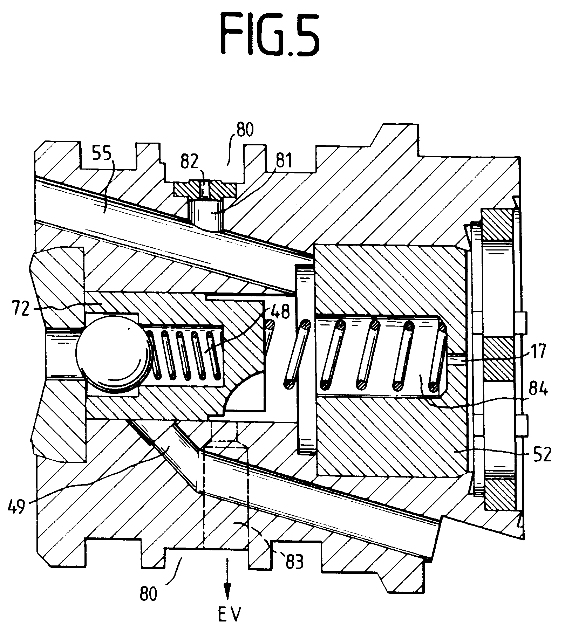

Der Gleitkörper kann nun als Schaltkörper für den Kanal 49 verwandt werden, was in Figur 5 noch näher dargestellt wird.

Figur 4 zeigt eine andere Anordnung der Dichtung 37 (siehe auch Figur 2). Die Dichtung befindet sich nun nicht mehr unterhalb der Kante 38, sondern oberhalb und korrespondiert mit der Innenwand der Hülse des Verschlußteils 39.

Die Figur 5 zeigt eine weitere Abwandlung des oberen Teils der Figur 2, wobei in einer axialen Bohrung des Ventilträgers 36 ein Ventilschieber 72 (siehe Figur 3) vorgesehen ist. Dieser Schieber erfüllt zwei Aufgaben. Zum einen steuert er den Kanal 49. Zum anderen steuert er den Bypass zu einer Drossel 82 in der Bremsleitung.

Dazu ist der Ventilträger 36 mit einer weiteren Nut 80 versehen, die auch von dem Ringraum 70 gebildet werden kann.

Die Nut 80 ist einerseits über einen Kanal 81, in die die Blende 82 eingefügt ist, mit dem Kanal 55 verbunden. Eine weitere Bohrung 83 verbindet die Nut 80 mit dem Raum zwischen dem Schieber 72 und dem Träger 52.

Im Gehäuse (nicht dargestellt) ist eine Verbindung vorgesehen, die die Nut 80 mit dem Einlaßventil 4 verbindet (EV).

Bei einem normalen Druckaufbau, bei dem keine Bremsdruckregelung stattfindet, erfolgt die Verbindung zwischen Hauptbremszylinder und der Radbremse über den Kanal 55, den Raum 84, den Kanal 83 und von dort über das offene Einlaßventil zur Radbremse 2.

Wenn eine Bremsschlupfregelung stattfindet, setzt die Pumpe mit ihrer Förderung ein, so daß Druckmittel in den Auslaßraum 48 gelangt. Der Kolben 72 wird dadurch, gemäß der Darstellung nach rechts verschoben, und versperrt die Einmündung des Kanals 83 in den Raum 84. Die oben genannte Verbindung ist dadurch unterbrochen. Druckmittel vom Hauptzylinder fließt daher nun über die Drossel 82 in den Ringraum 80 und von dort zum Einlaßventil (EV).

Diese Drosselung bewirkt, daß der Druck vor dem Einlaßventil gemindet ist gegenüber dem Druck im Hauptzylinder. Dies wiederum hat zur Folge, daß das Druckgefälle am Einlaßventil verringert ist und damit, wie erwiesen, die Geräuschemission dieses Ventils verringert wird.

Bei einer weiteren Verschiebung des Kolbens 72 wird letztlich der Kanal 49 freigegeben, so daß eine Verbindung der Pumpe über den Kanal 49 und der Drossel 17 zum Kanal 55 und damit zum Hauptzylinder bzw. über die Drossel 82 zum Radzylinder existiert.

## Patentansprüche

1. Pumpe für blockiergeschützte hydraulische Bremsanlagen, mit einem Druckventil (10), das in einem in das Pumpengehäuse einsteckbaren Trägerkörper (36) ausgebildet ist, wobei der Trägerkörper (36) einen Kanal (49) aufweist, der in eine Kammer (40) führt, die wiederum über eine Drossel (17) mit dem zu versorgenden Bremskreis verbunden ist, wobei der Trägerkörper (36) im wesentlichen als Zylinder ausgebildet ist, wobei der Kanal (49) zur Seitenwand des Zylinders führt und der Trägerkörper (36) zum Teil in einem topfförmigen Haltekörper steckt und wobei der Außendurchmesser des Trägerkörpers (36) nur wenig kleiner ist als der Innendurchmesser des Haltekörpers, **dadurch gekennzeichnet,** daß senkrecht zur Achse (31), die jeweils einen über einen Exzenter (33) angetriebenen Pumpkolben (32) im Pumpengehäuse (30) aufnimmt, jeweils eine gestufte Sackbohrung (35) vorgesehen ist, die mit einem Pumpenraum (34) korrespondieren, daß die Sackbohrung (35) jeweils einen von einem topfförmigen Verschlußteil (39) gehaltenen Trägerkörper (36) aufnimmt, und daß am Trägerkörper (36) ein Kolben (18) anlegbar ist, der in koaxialer Anordnung zum Trägerkörper (36) und unter Wirkung einer nur leicht vorgespannten Feder (63) während einer Bremsschlupfregelung in der Kammer (40) an einem rückwärtigen Anschlag des Verschlußteils (39) anliegt und einen Übergangsspeicher (15) gefüllt hält, bis der stromabwärts an einem Rückschlagventil (16) und im Trägerkörper (36) anstehende Druck des Hauptbremszylinders (1) unterhalb dem Ventilöffnungsdruck des stromabwärts öffnenden Rückschlagventils (16) abgesunken ist.

2. Pumpe nach Anspruch 1, dadurch **gekennzeichnet**, daß der Trägerkörper (36) eine Sackbohrung aufweist, in die ein Einsatzstück (52), mit der Drossel (17) eingesetzt ist.

3. Pumpe nach Anspruch 2, dadurch **gekennzeichnet**, daß vor dem Einsatzstück (52) ein Filter (54) angeordnet ist.

4. Pumpe nach Anspruch 3, dadurch **gekennzeichnet**, daß in dem vom Einsatzstück (52) begrenzten Raum im Trägerkörper (36) ein Rückschlagventil (16) angeordnet ist.

## Claims

1. A pump for anti-lock hydraulic braking systems, including a pressure valve (10) which is formed within a carrier element (36) adapted to be inserted into the pump casing, with the carrier element (36) comprising a channel (49) leading to a chamber (40) which, in turn, through a restrictor (17), is connected to the brake circuit to be energized, with the carrier element (36) substantially being of cylindrical configuration, with the channel (49) leading to the side wall of the cylinder, and the carrier element (36), in part, being inserted into a cup-shaped retaining member, and with the outer diameter of the carrier element (36) being only slightly smaller than the inside diameter of the retaining member,
**characterized** in that, vertically relative to the axis (31), which in each case accommodates a pump piston (32) in the pump housing (30) driven by an eccentric (33), each one stepped blind-end bore (35) is provided to communicate with a pump chamber (34), in that the blind-end bore (35) in each case accommodates a carrier element (36) retained by a bowl-shaped closure member (39), and in that a piston (18) is abuttable on the carrier element (36) which, in coaxial arrangement relative to the carrier element (36) and under the effect of an only slightly preloaded spring (63), during brake slip control, bears against a backward stop of the closure member (39) in the chamber (40) and keeps a transitory reservoir (15) filled until the pressure of the master brake cylinder (1) prevailing downstream of a check valve (16) and in the carrier element (36) has dropped below the valve opening pressure of the downstream opening check valve (16).

2. A pump as claimed in claim 1,
**characterized** in that the carrier (36) contains a blind-end bore in which is inserted an insert member (52) along with the restrictor (17).

3. A pump as claimed in claim 2,
**characterized** in that a filter (54) is arranged ahead of the insert element (52).

4. A pump as claimed in claim 3,
**characterized** in that a check valve (16) is provided in the chamber in the valve carrier (36) confined by the insert member (52).

## Revendications

1. Pompe, pour système de freinage hydraulique antiblocage, comprenant une valve de refoulement (10), réalisée dans un corps de support (36) qui est agencé de façon à pouvoir être emboîté dans le boîtier de pompe et qui comporte un conduit (49) qui mène à une chambre (40) qui est elle-même reliée, par l'intermédiaire d'un étranglement (17), au circuit de frein à alimenter, tandis que le corps de support (36) est réalisé pratiquement sous forme d'un cylindre, que le conduit (49) mène à la paroi latérale du cylindre et que le corps de support (36) s'emboîte en partie dans un corps de maintien en forme de pot, le diamètre extérieur du corps de support (36) n'étant inférieur que de peu au diamètre intérieur du corps de maintien, caractérisée en ce que, perpendiculairement à l'axe (31) suivant lequel sont logés, dans le boîtier de pompe (30), des pistons de pompe (32) entraînés par un excentrique (33), il est prévu, pour chacun des pistons de pompe, un alésage borgne (35) étagé qui communique avec une chambre de pompe (34), en ce que chaque alésage borgne (35) sert à loger un corps de support (36) maintenu par une pièce de fermeture (39) en forme de pot et en ce qu'un piston (18) est agencé de façon à pouvoir être appliqué sur le corps de support (36) et, pendant une régulation du glissement de freinage, ce piston, qui est disposé suivant le même axe que le corps de support (36) et est soumis l'action d'un ressort (63) ne présentant qu'une faible précontrainte, est appliqué en appui, dans la chambre (40), sur une butée arrière présentée par la pièce de fermeture (39) et maintient un accumulateur de transition (15) rempli, jusqu'à ce que la pression du maître-cylindre de frein (1) qui règne en aval sur une valve antiretour (16) et dans le corps de support (36) soit devenue inférieure à la pression d'ouverture de la valve antiretour (16) qui s'ouvre vers l'aval.

2. Pompe selon la revendication 1, caractérisée en ce que le corps de support (36) comporte un alésage borgne dans lequel est placée une pièce rapportée (52) comportant l'étranglement (17).

3. Pompe selon la revendication 2, caractérisée en ce qu'un filtre (54) est disposé en avant de la pièce rapportée (52).

4. Pompe selon la revendication 3, caractérisée en ce qu'une valve antiretour (16) est disposée dans la chambre ménagée dans le corps de support (36) qui est délimitée par la pièce rapportée (52).
